# EUROPÄISCHE PATENTANMELDUNG

(11) **EP 3 636 377 A1**
(43) Veröffentlichungstag der Anmeldung: **15.04.2020**
(21) Anmeldenummer: 19193522.0
(22) Anmeldetag: 26.08.2019
(51) Int. Cl.: B23K 11/11, B23K 11/25, B23K 31/12

(54) **VERFAHREN ZUM WIDERSTANDSSCHWEISSEN VON WERKSTÜCKEN**

(30) Priorität: 11.10.2018 DE 102018217366
(71) Anmelder: Robert Bosch GmbH, 70442 Stuttgart (DE)
(72) Erfinder: Stolze, Josephine, 69412 Eberbach (DE); Haeufgloeckner, Juergen, 63936 Schneeberg (DE)

(57) **Zusammenfassung**

Die Erfindung betrifft ein Verfahren zum Widerstandsschweißen von Werkstücken (121, 122), wobei Schweißelektroden (111, 112) mit Hilfe eines Elektrodenantriebs (130) mit einer Elektrodenkraft gegen einen Schweißpunkt (125) der Werkstücke (121, 122) gepresst werden und wobei im Zuge eines Schweißprozesses die Schweißelektroden (111, 112) mit einem Schweißstrom bestromt werden, wobei wenigstens ein Antriebsparameter des Elektrodenantriebs (130) bestimmt wird und wobei in Abhängigkeit von dem wenigstens einen Antriebsparameter eine Regelung und/oder Überwachung des Schweißprozesses durchgeführt wird.

## Beschreibung

Die vorliegende Erfindung betrifft ein Verfahren zum Widerstandsschweißen von Werkstücken sowie eine Steuereinheit, ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst im Zuge einer sog. Kraftaufbauphase zwei Schweißelektroden einer Schweißzange mit Hilfe eines Elektrodenantriebs gegen einen Schweißpunkt der Werkstücke gepresst bis eine vorgegebene Elektrodenkraft erreicht ist. Anschließend erfolgt der eigentliche Schweißprozess, im Zuge dessen die Schweißelektroden für die Dauer einer Schweißzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden.

### Offenbarung der Erfindung

Vor diesem Hintergrund werden ein Verfahren zum Widerstandsschweißen von Werkstücken sowie eine Steuereinheit, ein Schweißgerät und ein Computerprogramm zu dessen Durchführung mit den Merkmalen der unabhängigen Patentansprüche vorgeschlagen.

Vorteilhafte Ausgestaltungen sind Gegenstand der Unteransprüche sowie der nachfolgenden Beschreibung.

Im Rahmen des Verfahrens werden Schweißelektroden mit Hilfe eines Elektrodenantriebs mit einer Elektrodenkraft gegen einen Schweißpunkt der Werkstücke gepresst und im Zuge eines Schweißprozesses werden die Schweißelektroden mit einem Schweißstrom bestromt. Wenigstens ein Antriebsparameter des Elektrodenantriebs wird bestimmt und in Abhängigkeit von dem wenigstens einen Antriebsparameter wird eine Regelung und/oder Überwachung des Schweißprozesses durchgeführt.

Der Erfindung liegt die Erkenntnis zugrunde, Antriebsparameter, welche im Rahmen der Regelung bzw. Steuerung des Elektrodenantriebs bestimmt werden, ferner für die Regelung und/oder Überwachung des Schweißprozesses zu verwenden. Auf herkömmliche Weise erfolgt beim Widerstandsschweißen zumeist eine Regelung des Elektrodenantriebs, meist mittels eines entsprechenden Antriebsregelgeräts, und davon unabhängig eine Regelung des Schweißprozesses, zumeist mittels einer separaten, unabhängigen Schweißsteuerung. Im Zuge der Schweißprozessregelung kann üblicherweise nicht auf Parameter der Antriebsregelung zugegriffen werden. Im Rahmen der vorliegenden Erfindung wurde nun erkannt, dass es erhebliche Vorteile mit sich bringt, wenn aus der Regelung des Elektrodenantriebs stammende Antriebsparameter in die Überwachung bzw. Regelung des Schweißprozesses einbezogen werden. Die Erfindung stellt somit eine Möglichkeit bereit, die Regelungen des Schweißprozesses und des Elektrodenantriebs miteinander zu verknüpfen und die zumeist ohnehin für die Regelung des Elektrodenantriebs bestimmten Antriebsparameter in die Regelung bzw. Überwachung des Schweißprozesses einzubinden.

Insbesondere wurde im Rahmen der Erfindung erkannt, dass sich spezielle Ereignisse und Eigenschaften des Schweißprozesses spezifisch auf Antriebsparameter des Elektrodenantriebs auswirken. Durch eine Überwachung bzw. Auswertung der entsprechenden Antriebsparameter kann daher zweckmäßigerweise rückgeschlossen werden, ob derartige spezielle Ereignisse während des Schweißprozesses eintreten bzw. wie sich die Eigenschaften während des Schweißprozesses verändern. Veränderungen der Werkstücke und deren Eigenschaften an dem Schweißpunkt aufgrund des Schweißprozesses beeinflussen insbesondere das mechanische Verhalten bzw. mechanische Eigenschaften der Schweißelektroden am Schweißpunkt. Durch Berücksichtigung der entsprechenden Antriebsparameter kann somit insbesondere auf eine Qualität des Schweißprozesses rückgeschlossen werden, insbesondere auf einen Punktdurchmesser des Schweißpunkts sowie auf eine Stabilität des Schweißprozesses.

Als Antriebsparameter seien in diesem Zusammenhang insbesondere Größen bzw. Parameter zu verstehen, welche im Zuge einer Regelung bzw. Steuerung des Elektrodenantriebs bestimmt werden, um die Schweißelektroden auf vorgegebene Weise zu bewegen und gegen die Werkstücke zu pressen. Insbesondere charakterisieren die Antriebsparameter eine aktuelle Lage bzw. Position oder Bewegung der Schweißelektroden. Von aktuellen Werten bzw. zeitlichen Verläufen der Antriebsparameter kann daher zweckmäßigerweise auf die aktuelle Lage der Schweißelektroden rückgeschlossen werden und davon ausgehend wiederum auf den Schweißprozess bzw. Eigenschaften der Werkstücke. Daher bieten sich die Antriebsparameter besonders für die Regelung bzw. Überwachung des Schweißprozesses an. So kann beispielsweise eine Wärmeausdehnung der Werkstücke am Schweißpunkt dazu führen, dass die Schweißelektroden auseinander bewegt werden, was sich in dem zeitlichen Verlauf bestimmter Antriebsparameter widerspiegelt, von welchen auf die aktuelle Lage bzw. Position der Schweißelektroden rückgeschlossen werden kann.

Die Antriebsparameter können somit zweckmäßigerweise als redundante bzw. zusätzliche Informationen für die Regelung bzw. Überwachung des Schweißprozesses verwendet werden, wodurch der Schweißprozess effektiv und präzise durchgeführt und eine erhöhte Qualität des Schweißprozesses durch eine verbesserte Schweißprozessregelung erreicht werden kann. Durch die Auswertung zusätzlicher Prozessgrößen in Form des wenigstens einen Antriebsparameters werden eine präzise Beurteilung der Qualität der Schweißpunkte und eine verbesserte Schweißprozessüberwachung ermöglicht. Ferner wird eine verbesserte Regelung bzw. Überwachung des Schweißprozesses ermöglicht, ohne dass zusätzliche Hardware benötigt wird, insbesondere ohne zusätzliche Sensoren. Durch Vermeidung zusätzlicher Sensoren können somit erhöhte Kosten, höhere Ausfallwahrscheinlichkeiten sowie erhöhter Installations- und Wartungsaufwand vermieden werden.

Gemäß einer besonders vorteilhaften Ausführungsform der Erfindung wird im Zuge der Überwachung des Schweißprozesses in Abhängigkeit von dem wenigstens einen Antriebsparameter eine Erkennung von Schweißspritzern durchgeführt. Als Schweißspritzer seien in diesem Zusammenhang Tropfen geschmolzenen Metalls zu verstehen, die aufgrund der extremen Intensität von Hitze und Kraft, die an oder um den Schweißpunkt herum aufgebracht werden, ausbrechen. Derartige Schweißspritzer können die Schweißqualität negativ beeinflussen und zur Verschmutzung von metallischen Oberflächen führen, insbesondere den Werkstückoberflächen und den Oberflächen des Schweißgeräts selbst, beispielsweise den Elektrodenkappen. Daher ist es von Bedeutung, Schweißspritzer präzise erkennen zu können, um derartigen negativen Einflüssen entgegenwirken zu können.

Im Rahmen der vorliegenden Erfindung wurde erkannt, dass spezielle Antriebsparameter des Elektrodenantriebs eine besonders vorteilhafte Möglichkeit darstellen, um Schweißspritzer erkennen zu können. Da durch einen Schweißspritzer flüssiges Metall von den Werkstücken wegbewegt wird, werden die Schweißelektroden beim Auftreten eines Schweißspritzers weiter auf die Werkstücke zu bewegt und die aktuelle Lage bzw. Position der Schweißelektroden verändert sich. Durch Auswerten von Antriebsgrößen, welche die Lage bzw. Position der Schweißelektroden charakterisieren, können Schweißspritzer daher besonders vorteilhaft erkannt werden. Wenn im Zuge der Überwachung des Schweißprozesses Schweißspritzer erkannt werden, kann ferner zweckmäßigerweise die Regelung des Schweißprozesses angepasst werden, um entsprechenden negativen Einflüssen entgegenzuwirken.

Um auf herkömmliche Weise Schweißspritzer erkennen zu können, werden zumeist elektrische Größen der Schweißprozessregelung untersucht und ausgewertet, zumeist ein elektrischer Widerstand zwischen den Schweißelektroden, da das Auftreten von Schweißspritzern zu Veränderungen im zeitlichen Verlauf derartiger elektrischer Größen führt. Jedoch können nicht nur Schweißspritzer, sondern auch andere Störungen zu Veränderungen in dem zeitlichen Verlauf dieser elektrischen Größen führen, ähnlich zu den durch Schweißspritzer verursachten Veränderungen. Auf herkömmliche Weise ist es zumeist nicht ohne weiteres möglich zu unterscheiden, ob derartige Veränderungen nun von Schweißspritzern oder von anderen Störungen hervorgerufen werden. Werden nun derartige Veränderungen erkannt und daraufhin beispielsweise Gegenmaßnahmen durchgeführt, um Schweißspritzern entgegenzuwirken, obwohl diese Veränderungen nicht durch Schweißspritzer, sondern durch eine andere Störung verursacht wurden, reichen diese Gegenmaßnahmen meist nicht aus, um die negativen Einflüsse der entsprechenden Störung zu verringern bzw. auszuregeln. Im Gegensatz dazu ermöglicht das vorliegende Verfahren vorteilhafterweise zwischen Schweißspritzern und anderen Störungen zu unterscheiden, da sich unterschiedliche Störungen und das Auftreten von Schweißspritzern jeweils individuell auf spezielle Antriebsparameter des Elektrodenantriebs auswirken. Somit kann zweckmäßigerweise eine individuelle Gegenmaßnahme vorgenommen werden, je nachdem ob ein Schweißspritzer bzw. eine spezielle Störung erkannt wird.

Vorteilhafterweise wird daher im Zuge der Überwachung des Schweißprozesses in Abhängigkeit von dem wenigstens einen Antriebsparameter eine Erkennung von Störungen durchgeführt. Als derartige Störungen seien in diesem Zusammenhang insbesondere mechanische Einflüsse bzw. Gegebenheiten des Schweißgeräts und insbesondere der Schweißelektroden zu verstehen, welche die Qualität des Schweißprozesses negativ beeinflussen können. Verschiedene Störungen wirken sich insbesondere spezifisch auf spezielle Antriebsparameter aus, so dass durch Auswerten dieser Antriebsparameter die jeweiligen Störungen erkannt werden können und den jeweiligen negativen Einflüssen entgegengewirkt werden kann.

Derartige Störungen können vorteilhafterweise eine Randschweißung umfassen, also ein Schweißprozess an Randbereichen der Werkstücke, eine schlechte Passung der Schweißelektroden, wenn also die Schweißelektroden die Werkstücke nicht deckungsgleich berühren, und eine Schiefstellung der Schweißelektroden, insbesondere wenn eine oder beide Schweißelektroden nicht senkrecht auf das jeweilige Werkstück gerichtet sind.

Vorteilhafterweise wird im Zuge der Regelung des Schweißprozesses wenigstens ein Schweißparameter in Abhängigkeit von dem wenigstens einen Antriebsparameter bestimmt. Wie obig erläutert, sind unter den Antriebsparametern insbesondere Größen bzw. Parameter zu verstehen, welche für die Bewegung der Schweißelektroden und somit insbesondere für den mechanischen Betrieb der Schweißelektroden bestimmt werden. Im Gegensatz dazu sind unter Schweißparametern zweckmäßigerweise Größen bzw. Parameter zu verstehen, welche den Schweißprozess selbst betreffen und somit insbesondere einen elektrischen Betrieb der Schweißelektroden. Besonders bevorzugt werden als der wenigstens eine Schweißparameter wenigstens ein Sollwert der Schweißprozessregelung in Abhängigkeit von wenigstens einem Istwert der Antriebsregelung als der wenigstens eine Antriebsparameter bestimmt. Zweckmäßigerweise kann im Zuge der Regelung des Schweißprozesses somit automatisch auf Schweißspritzer und/oder Störungen reagiert werden, welche sich auf Antriebsparameter auswirken.

Vorzugsweise werden der Schweißstrom und/oder eine Schweißspannung und/oder eine Stromzeit bzw. Schweißzeit (d.h. die Zeit, während welcher der Schweißstrom fließt) als der wenigstens eine Schweißparameter in Abhängigkeit von dem wenigstens einen Antriebsparameter bestimmt. Zweckmäßigerweise kann die Bestromung der Schweißelektroden somit automatisch auf Schweißspritzer und/oder Störungen angepasst werden.

Bevorzugt werden als der wenigstens eine Antriebsparameter wenigstens eine Steuer- und/oder Regelungsgröße des Elektrodenantriebs bestimmt. Insbesondere werden Istwerte und/oder Sollwerte des Elektrodenantriebs als Antriebsparameter bestimmt, welche im Zuge der Regelung des Elektrodenantriebs bestimmt werden, um die Elektrodenkraft auf einen vorgegebenen Wert zu regeln. Bei dem Elektrodenantrieb kann es sich insbesondere um einen elektrischen und/oder mechanischen und/oder pneumatischen Elektrodenantrieb handeln. Bei den Antriebsparametern kann es sich daher beispielsweise um entsprechende elektrische und/oder mechanische und/oder pneumatische Größen handeln.

Vorteilhafterweise wird als der wenigstens eine Antriebsparameter ein Lageistwert des Elektrodenantriebs bestimmt, also insbesondere die aktuelle Lage bzw. Position einer oder beider Schweißelektroden. Beispielsweise kann der Lageistwert dabei relativ zu dem Schweißpunkt bzw. den Werkstücken bestimmt werden oder zweckmäßigerweise auch in Relation zu einem Referenzpunkt des Schweißgeräts, insbesondere zu einer Ruhelage der Schweißelektroden. Insbesondere charakterisiert die Lage bzw. der Lageistwert die Position der Elektrodenkappen im Raum. Ferner wird insbesondere nur eine Achse betrachtet, zweckmäßigerweise eine Achse in Bewegungsrichtung der Elektroden, welche durch einen Lageistwert eines die Elektroden öffnenden und schließenden Antriebs gegeben sein kann. Der Lageistwert stellt einen besonders vorteilhaften Antriebsparameter dar, um auf Eigenschaften und Gegebenheiten des Schweißprozesses rückzuschließen und um insbesondere Schweißspritzer und Störungen zu erkennen. Beispielsweise führt eine Erwärmung der Werkstücke durch den Schweißprozess zu einer Ausdehnung der Werkstücke, wodurch die Schweißelektroden auseinander bewegt werden und sich der Lageistwert insbesondere verringert. Da sich bei Schweißspritzern flüssiges Metall von den Werkstücken entfernt, führt dies dazu, dass die Schweißelektroden weiter auf die Werkstücke zu bewegt werden und sich der Lageistwert insbesondere erhöht. Ein unerwünschtes Einsinken der Schweißelektroden in das Schweißbad führt insbesondere zu einer Erhöhung des Lageistwerts.

Alternativ oder zusätzlich wird als der wenigstens eine Antriebsparameter vorteilhafterweise ein Drehmomentistwert des Elektrodenantriebs bestimmt. Ein Motor des Elektrodenantriebs, beispielsweise ein Servomotor, gibt insbesondere ein Drehmoment an eine Antriebsspindel des Elektrodenantriebs ab. Dadurch stellt sich abhängig von mechanischen Parametern insbesondere eine gewisse Kraft ein, deren Istwert zweckmäßigerweise auf einen Sollwert geregelt wird, wozu insbesondere der Drehmomentistwert entsprechend verändert wird. Insbesondere ist die Elektrodenkraft eine von diesem Drehmoment abgeleitete Größe. Auch der Drehmomentistwert stellt einen besonders vorteilhaften Antriebsparameter dar, um Eigenschaften und Gegebenheiten des Schweißprozesses zu bewerten und um zweckmäßigerweise Schweißspritzer und Störungen zu erkennen. Unterschiedliche Störungen und Schweißspritzer führen jeweils insbesondere zu charakteristischen Veränderungen der Amplitude des Drehmomentistwerts, insbesondere jeweils zu einem Anstieg mit charakteristischer Steigung.

Alternativ oder zusätzlich werden als der wenigstens eine Antriebsparameter vorteilhafterweise ein Drehzahlistwert und/oder ein Drehzahlsollwert und/oder ein drehmomentbildender Strom des Elektrodenantriebs bestimmt. Insbesondere bieten sich derartige Antriebsparameter bei elektrischen oder elektromechanischen Elektrodenantrieben an, welche eine elektrische Maschine umfassen.

Alternativ oder zusätzlich werden als der wenigstens eine Antriebsparameter vorteilhafterweise ein Beschleunigungsistwert und/oder eine Zangenschließgeschwindigkeit des Elektrodenantriebs bestimmt. Aus diesen Antriebsparametern kann zweckmäßigerweise auf eine Bewegung der Schweißelektroden rückgeschlossen werden.

Bevorzugt sind die Werkstücke aus Aluminium und/oder Stahl gefertigt. Die Werkstücke können dabei beispielsweise dünne Bleche mit einer Dicke von insbesondere bis zu 1 mm sein. Ein Widerstandsschweißen derartiger Werkstücke stellt besonders schwierige Anwendungsfälle für eine präzise Schweißprozessregelung dar. Durch die verbesserte Regelung bzw. Überwachung des Schweißprozesses kann das Widerstandsschweißen in derartigen schwierigen Anwendungsfällen verbessert werden.

Besonders vorteilhaft eignet sich das Verfahren für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte (z.B. ca. 5.000 Schweißpunkte für ein Mittelklasse-Fahrzeug) automatisiert bearbeitet werden. Durch das Verfahren können die einzelnen Schweißpunkte mit bestmöglicher Qualität verschweißt werden.

Eine erfindungsgemäße Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist insbesondere eine Schweißzange mit Schweißelektroden sowie einen Elektrodenantrieb zum Bewegen der Schweißelektroden auf. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Fig. 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Fig. 2: zeigt schematisch eine bevorzugte Ausführungsform eines erfindungsgemäßen Verfahrens als ein Blockdiagramm.
- Fig. 3: zeigt schematisch zeitliche Verläufe von Drehmomentistwerten eines Elektrodenantriebs eines Schweißgeräts, die im Zuge einer bevorzugten Ausführungsform eines erfindungsgemäßen Verfahrens bestimmt werden können.

### Detaillierte Beschreibung der Zeichnung

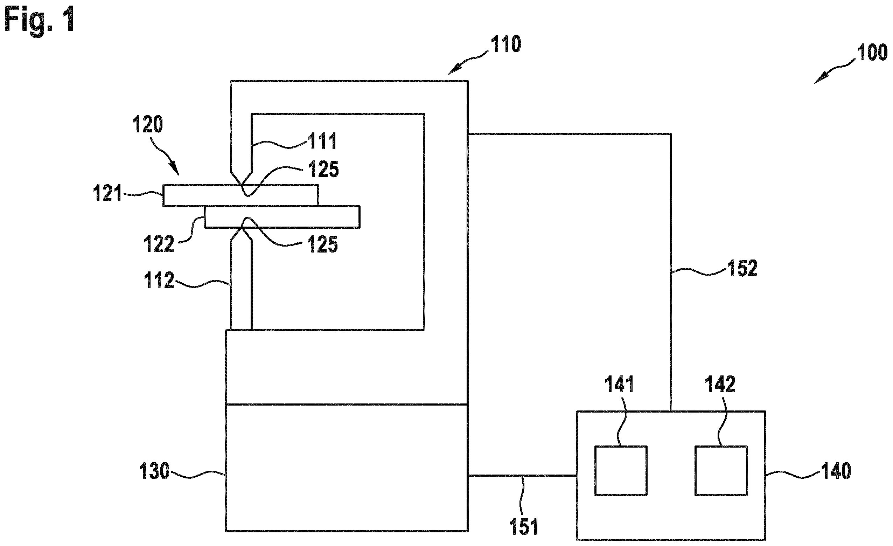

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißens werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt.

Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 zu regeln, angedeutet durch Bezugszeichen 151, und ferner den Schweißprozess, angedeutet durch Bezugszeichen 152. Zu diesem Zweck werden in der Steuereinheit 130 eine entsprechende Antriebsregelung 141 und eine entsprechende Schweißprozessregelung 142 durchgeführt, welche jeweils als entsprechende Steuerungsprogramme oder auch als ein gemeinsames Steuerungsprogramm implementiert sein können.

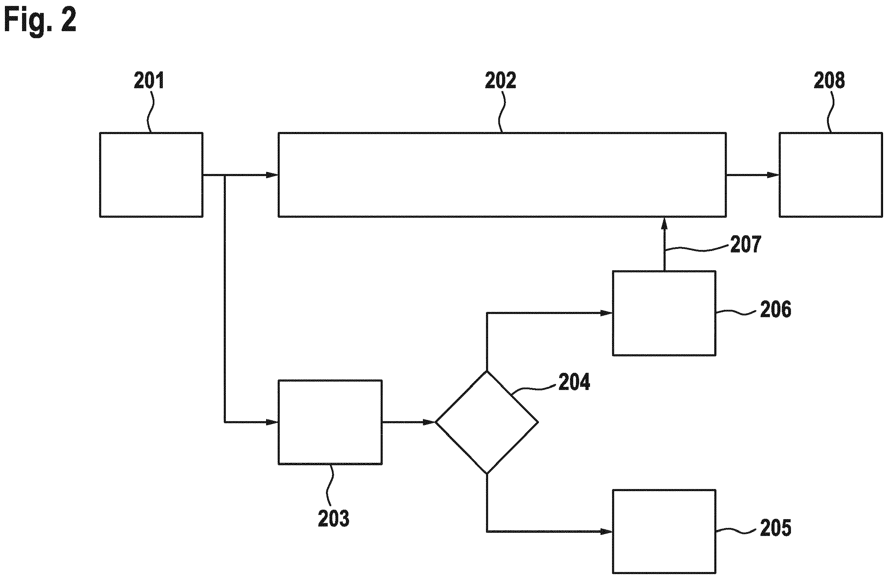

Die Steuereinheit 140 ist ferner, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

In einem Schritt 201 erfolgt zunächst die Kraftaufbauphase, im Zuge derer die Schweißelektroden 111 und 112 mit Hilfe des Elektrodenantriebs 130 an dem Schweißpunkt 125 gegen die Bleche 121 und 122 gedrückt werden, bis die vorgegebene Elektrodenkraft erreicht ist.

Im Zuge der Antriebsregelung werden zu diesem Zweck Antriebsparameter des Elektrodenantriebs 130 bestimmt, um die Elektrodenkraft auf den vorgegebenen Wert zu regeln. Als Antriebsparameter werden beispielsweise ein Lageistwert der Schweißelektroden 111, 112 sowie ein Drehmomentistwert und Drehzahlistwert des Elektrodenantriebs 130 bestimmt, insbesondere zyklisch in vorgegebenen Zeitintervallen von beispielsweise 1ms.

In Schritt 202 beginnen der eigentliche Schweißprozess und die Bestromung der Elektroden 111, 112. Dabei werden im Zuge der Schweißprozessregelung Schweißparameter bestimmt bzw. geregelt, insbesondere der Schweißstrom und die Schweißzeit.

Parallel zu der Bestromung der Elektroden werden in Schritt 203 weiterhin die Antriebsparameter Lageistwert, Drehmomentistwert und Drehzahlistwert in den zyklischen Zeitintervallen von 1ms bestimmt. In Abhängigkeit von diesen Antriebsparametern wird nun eine Überwachung des Schweißprozesses durchgeführt, insbesondere eine Erkennung von Schweißspritzern und ferner von weiteren Störungen. Zu diesem Zweck werden in Schritt 204 die Antriebsparameter bzw. deren zeitliche Verläufe ausgewertet. Beispielsweise können der zeitliche Verlauf des Lageistwerts sowie der zeitliche Verlauf des Drehmomentistwerts ausgewertet werden.

Bei einem Schweißprozess ohne Schweißspritzer und ohne andere Störungen besitzen der Lageistwerts sowie der Drehmomentistwert einen typischen, charakteristischen Verlauf. Treten hingegen Schweißspritzer oder andere Störungen wie Randschweißungen auf, wirken sich diese Effekte jeweils charakteristisch auf die zeitlichen Verläufe des Lageistwerts und des Drehmomentistwerts aus und verändern diese Verläufe in charakteristischer Weise.

Daher werden in Schritt 204 die zeitlichen Verläufe des Lageistwerts und des Drehmomentistwerts auf diese charakterlichen Veränderungen aufgrund von Schweißspritzern oder anderen Störungen hin untersucht. Wenn keine derartigen Veränderungen vorliegen, wird in Schritt 205 erkannt, dass keine Schweißspritzer und keine anderen Störungen vorliegen.

Wenn hingegen derartige Veränderungen vorliegen, wird in Schritt 206 erkannt, dass Schweißspritzer bzw. die entsprechende Störung vorliegen, je nachdem welche charakteristische Veränderung erkannt wird. In diesem Fall können im Zuge der Schweißprozessregelung insbesondere Schweißparameter an die erkannten Schweißspritzer bzw. die erkannte Störung angepasst werden, angedeutet durch Bezugszeichen 207. Beispielsweise können der Schweißstrom und die Schweißzeit angepasst werden. Die Schweißprozessregelung wird somit insbesondere in Abhängigkeit von den bestimmten Antriebsparametern durchgeführt.

Nachdem die Bestromung der Schweißelektroden 111, 112 beendet ist und die Bleche 121 und 122 an dem Schweißpunkt 125 miteinander verschweißt sind, wird die Elektrodenkraft in Schritt 208 mit Hilfe des Elektrodenantriebs 130 im Zuge einer sog. Kraftabbauphase verringert und die Schweißelektroden 111, 112 werden wieder von den Blechen 121 und 122 weg bewegt.

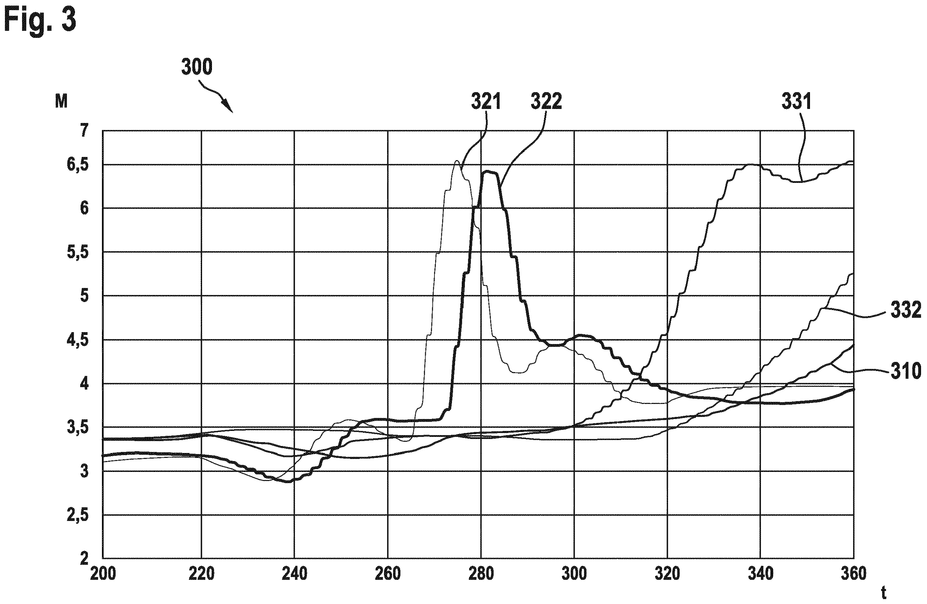

Figur 3 zeigt schematisch ein Diagramm 300 des Drehmomentistwerts M des Elektrodenantriebs 130 aufgetragen gegen die Zeit t. In dem Diagramm 300 sind verschiedene zeitliche Verläufe von Drehmomentistwerten M gezeigt, die im Zuge einer bevorzugten Ausführungsform des erfindungsgemäßen Verfahrens bestimmt werden können.

Kurve 310 zeigt einen zeitlichen Verlauf des Drehmomentistwerts bei einem Schweißprozess ohne Schweißspritzer und ohne andere Störungen. Das Drehmoment M verläuft in diesem Fall sehr stabil. Die nur geringfügigen Schwankungen in diesem Fall sind mit der Erwärmung und Abkühlung des Schweißguts zu begründen.

Die Kurven 321 und 322 zeigen jeweils zeitliche Verläufe des Drehmomentistwerts bei Schweißprozessen mit Schweißspritzern. Durch den Materialverlust bei Schweißspritzern setzt die Schweißzange 110 nach und sinkt somit ein. Dies hat einen Kraftverlust zur Folge. Der Elektrodenantrieb 130 regelt die Kraft nach, was in der Erhöhung des Drehmoments M zu sehen ist. Ist die Kraft wieder auf den Sollwert geregelt, nimmt das Drehmoment M wieder ab.

Die Kurven 331 und 332 wiederum zeigen jeweils zeitliche Verläufe des Drehmomentistwerts bei Schweißprozessen mit Randschweißungen. Bei einer derartigen Randschweißung "rutschen" die Elektroden 111, 112 mit dem Aufschmelzen langsam seitlich von dem Werkstück herunter. Dies hat einen kontinuierlichen Kraftverlust zur Folge. Der Elektrodenantrieb 130 regelt die Kraft ständig nach, was in der Erhöhung und dem konstant hohen Wert des Drehmoments M zu sehen ist. Bei dem Fall gemäß Kurve 331 ist der Störeinfluss größer als im Beispiel gemäß Kurve 332.

Wie in Figur 3 zu erkennen ist unterscheiden sich die Kurven 310, 321, 322, 331, 332 deutlich voneinander und besitzen jeweils einen für den entsprechenden Schweißprozess charakteristischen Verlauf.

## Patentansprüche

1. Verfahren zum Widerstandsschweißen von Werkstücken (121, 122), wobei Schweißelektroden (111, 112) mit Hilfe eines Elektrodenantriebs (130) mit einer Elektrodenkraft gegen einen Schweißpunkt (125) der Werkstücke (121, 122) gepresst werden (201) und wobei im Zuge eines Schweißprozesses die Schweißelektroden (111, 112) mit einem Schweißstrom bestromt werden (202),
**dadurch gekennzeichnet, dass**
wenigstens ein Antriebsparameter des Elektrodenantriebs (130) bestimmt wird (203) und in Abhängigkeit von dem wenigstens einen Antriebsparameter eine Regelung und/oder Überwachung des Schweißprozesses durchgeführt wird (204, 207).

2. Verfahren nach Anspruch 1, wobei im Zuge der Überwachung des Schweißprozesses in Abhängigkeit von dem wenigstens einen Antriebsparameter eine Erkennung von Schweißspritzern durchgeführt wird (204).

3. Verfahren nach Anspruch 1 oder 2, wobei im Zuge der Überwachung des Schweißprozesses in Abhängigkeit von dem wenigstens einen Antriebsparameter eine Erkennung von Störungen durchgeführt wird (204).

4. Verfahren nach Anspruch 3, wobei als Störung eine Randschweißung und/oder eine schlechte Passung der Schweißelektroden und/oder einer Schiefstellung der Schweißelektroden erkannt werden (204).

5. Verfahren nach einem der vorstehenden Ansprüche, wobei im Zuge der Regelung des Schweißprozesses wenigstens ein Schweißparameter in Abhängigkeit von dem wenigstens einen Antriebsparameter bestimmt wird (207).

6. Verfahren nach Anspruch 5, wobei der Schweißstrom und/oder eine Schweißspannung und/oder eine Schweißzeit als der wenigstens eine Schweißparameter in Abhängigkeit von dem wenigstens einen Antriebsparameter bestimmt werden (207).

7. Verfahren nach einem der vorstehenden Ansprüche, wobei als der wenigstens eine Antriebsparameter wenigstens eine Steuer- und/oder Regelungsgröße des Elektrodenantriebs (130) bestimmt wird (203).

8. Verfahren nach einem der vorstehenden Ansprüche, wobei als der wenigstens eine Antriebsparameter ein Lageistwert und/oder ein Drehmomentistwert und/oder ein Drehzahlistwert und/oder ein Drehzahlsollwert und/oder ein drehmomentbildender Strom und/oder ein Beschleunigungsistwert und/oder eine Zangenschließgeschwindigkeit des Elektrodenantriebs (130) bestimmt werden (203).

9. Verfahren nach einem der vorstehenden Ansprüche, wobei die Werkstücke (121, 122) aus Aluminium und/oder Stahlblechen gefertigt sind.

10. Steuereinheit (140), die dazu eingerichtet ist, ein Verfahren nach einem der vorstehenden Ansprüche durchzuführen.

11. Schweißgerät (100) mit einem Elektrodenantrieb (130) und mit einer Steuereinheit (140) nach Anspruch 10.

12. Computerprogramm, das eine Steuereinheit (140) veranlasst, ein Verfahren nach einem der Ansprüche 1 bis 9 durchzuführen, wenn es auf der Steuereinheit (140) ausgeführt wird.

13. Maschinenlesbares Speichermedium mit einem darauf gespeicherten Computerprogramm nach Anspruch 12.
